# EUROPEAN PATENT APPLICATION

(11) **EP 2 372 629 A1**
(43) Date of publication of application: **05.10.2011**
(21) Application number: 10305341.9
(22) Date of filing: 02.04.2010
(51) Int. Cl.: G06Q 20/00, H04M 1/725, G06F 3/01, H04M 1/02

(54) **Method and subscriber identity module for performing financial transactions by use of mobile communication devices.**

(71) Applicant: Gemalto SA, 92190 Meudon (FR)
(72) Inventor: Ganem, Hervé, 92197, MEUDON (FR); Muller, Marc, 92190, MEUDON (FR)
(74) Representative: Cassagne, Philippe M.J.

(57) **Abstract**

The invention related to a method for performing a person-to-person cashless payment between a payer and a payee, each having a respective mobile communication device. The invention proposes the following steps:
- embedding in a removable module of each one of the two mobile communication devices, an accelerometer (120) and a payment application,
- launching the payment application for each one of the two removable modules,
- applying to said two mobile communication devices respective accelerations having common characteristics,
- sending from each one of the two respective removable modules to a remote equipment -within the mobile communication network - data representative of the applied acceleration, as a function of a signal produced by the accelerometer embedded in said each removable module;
- comparing in said remote system the data representative of said respective accelerations as sent by the two respective removable modules, and in case of matching of said data representative of said respective accelerations, authorizing the crediting of an account of the payee and the debiting of an account of the payer.

## Description

### FIELD OF THE INVENTION

The invention relates to a method and system for performing financial transactions by means of mobile handsets. More in particular, the invention relates for transferring funds electronically from a payer to a payee, using at least two mobile communication devices respectively owned by the payee and the payer and able to transmit messages, and a central payment gateway server for receiving such messages.

The advent of commerce in which payment for goods and services may be done electronically, has provided consumers with a much more efficient method of paying for the goods and services that they consume. Many institutions accept electronic fund payment whether it be via credit cards, telephone banking or more direct payment from an electronic purse of a consumer to an account of a goods or service provider.

More recent developments have allowed the consumer to transfer funds electronically via a mobile terminal. In particular, consumers are able to transfer funds electronically via a mobile phone through for example the use of Wireless Application Protocol (WAP) technology. This requires the user to log onto a network via wireless means, initiate a request for funds transfer receive confirmation and acknowledgement data and conduct the general funds transfer transaction on-line.

While convenient, this approach suffers from a number of draw backs. For example the user must be in possession of a WAP enabled mobile phone. At the current time, this covers only a limited percentage of mobile phone owners. A significant issue in this scheme is the way the consumer will identify the Payee. This problem is particularly critical in the so called person-to person (P2P) payment model, where the payer and the payee have respective mobile communication devices.

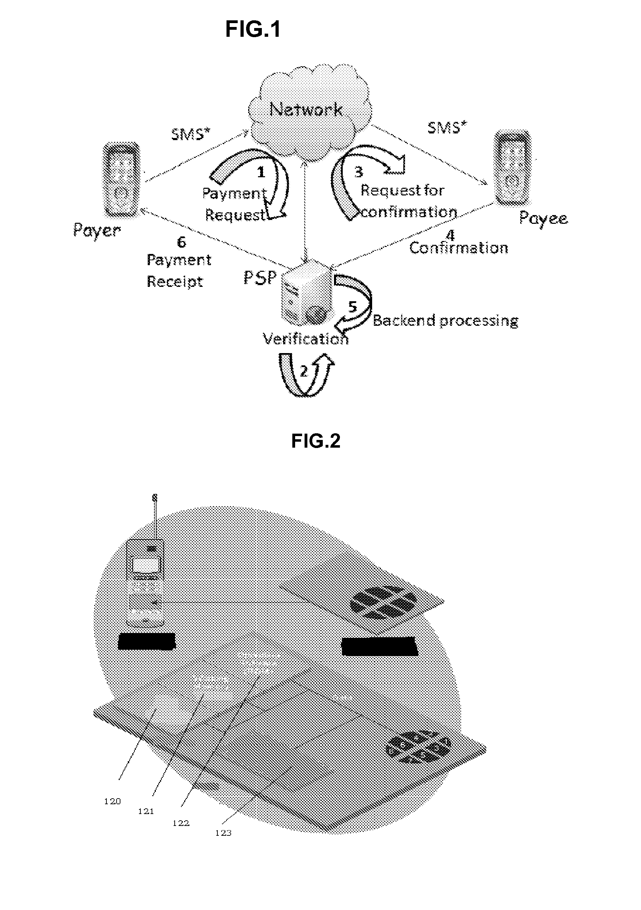

One possible alternative method to perform P2P payments, as illustrated in FIG.1, is as follows:
- The customer (Payer) uses his mobile communication device to send a payment request to a Gateway over a wireless network. This request includes the identification information of the Payee and the amount to be paid.
- The Gateway verifies the credentials of the Payer and the Payee (basically it checks whether the Payer and Payee have registered for such a P2P payment service).
- Optionally, the Gateway might request the Payer for some more details (like a password) for authentication.
- Once the credentials of the Payer have been established, the Gateway requests the Payee for confirmation by forwarding the payment details.
- The payee then sends a confirmation message to the Gateway.
- After successful confirmation, the Gateway performs back-end processing to update the accounts of the Payer and the Payee (Debit of an account and credit of another account).
- The Gateway sends a payment receipt (for example an SMS) to the Payer. It might also optionally send a "Transaction completed" SMS message to the Payee.

Another method which does not require the payer to provide an identifier of the payee to the Gateway works as follows:
- The customer (Payer) uses his mobile communication device to send a payment request to a Gateway over a wireless network. This request includes the amount to be paid.
- The Gateway verifies the credentials of the Payer and the Payee and send back to the Payer an electronic token identifying the transaction;
- The Payer transmits the electronic token to the Payee via any selected communication channel from handset to handset; Bluetooth is an option, NFC another one;
- The Payee then sends the electronic token to the Gateway and is presented the details of the transaction for approval;
- After confirmation, the Gateway performs back-end processing to update the accounts of the Payer and the Payee (Debit of an account and credit of another account); and
- The Gateway sends a payment receipt (for example an SMS) to the Payer. It might also optionally send a "Transaction completed" SMS message to the Payee.

The inconvenient of the two solutions described above is that the P2P payment requires either the identification of the Payee by the Payer (via for example the phone number) or the exchange of a token, which is significantly inconvenient from a user experience viewpoint.

### BACKGROUND OF THE INVENTION

The invention aims to solve the inconvenient described above.

The invention further proposes to allow quick deployment of a P2P payment solution to a large number of mobile communication devices to make it possible mobile payments among a every large number of mobile communication devices, by avoiding the change of most available mobile phones.

The invention also proposes a solution that is deployable independently of the software platform used by the mobile communication devices (Windows for Mobile®, Android®, Nokia® platform, etc...), thereby allowing a quick deployment.

Accordingly, a method for performing a person-to-person cashless payment between a payer and a payee, each having a respective mobile communication device, comprising the following steps:
- embedding in a removable module of each one of the two mobile communication devices, an accelerometer and a payment application,
- launching the payment application for each one of the two removable modules,
- applying to said two mobile communication devices respective accelerations having common characteristics,
- sending from each one of the two respective removable modules to a remote equipment -within the mobile communication network - data representative of the applied acceleration, as a function of a signal produced by the accelerometer embedded in said each removable module;
- comparing in said remote system the data representative of said respective accelerations as sent by the two respective removable modules, and in case of matching of said data representative of said respective accelerations, authorizing the crediting of an account of the payee and the debiting of an account of the payer.

The invention also proposes a removable module for insertion in a mobile communication device. It comprises :
- a processor,
- a memory,
- an accelerometer;
- a payment application stored in said memory,
- the processor executing said payment application for successively (a) - sending a display message to a mobile communication in which said subscriber identity module is inserted, (b) - processing accelerometer data during a defined time period following the sending of said display message, and then (c) sending to a remote equipment -within the mobile communication network - data representative of an acceleration applied to the accelerometer as a function of the signal produced by the accelerometer in said each subscriber identity module.

Other aspects, features and advantages of the present invention are included in the following description of representative embodiments, which description should be taken in conjunction with the accompanying drawings.

### BRIEF DESCRIPTION OF THE DRAWINGS:

- FIG. 1, already commented, is a schematic block diagram of a system for person-to-person (P2P) cashless payment between a payer and a payee, according to the prior art;
- FIG. 2 is a transversal block diagram of a subscriber identity module according to the invention;
- Fig.3 illustrates data collected from an triaxial accelerometer along the x-axis for a set of activities; and
- Fig.4 illustrates data a sliding window selecting a portion of a 3-axis signal produced by an triaxial accelerometer.

### DESCRIPTION OF PREFERRED EMBODIEMENTS

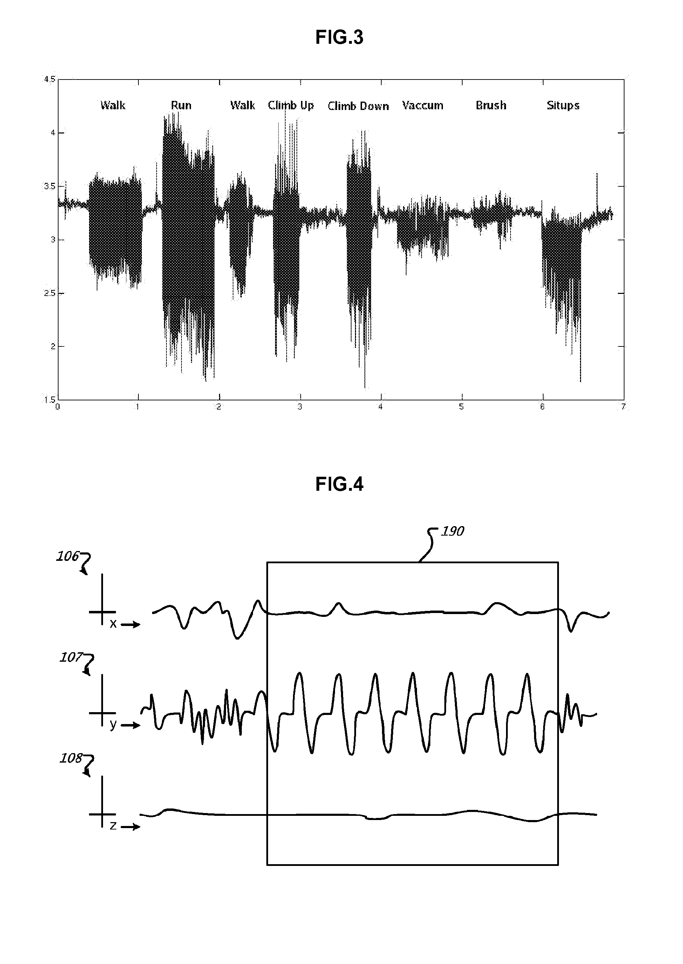

A triaxial accelerometer is a sensor that returns a real valued estimate of acceleration along the x, y and z axes from which velocity and displacement can also be estimated. Advances in miniaturization now permit accelerometers to be embedded within wrist bands, bracelets and belts and to wirelessly send data to a mobile computing device that can use the signals to make inferences. FIG.3 illustrates data collected from an accelerometer along the x-axis for a set of eight activities (Department of Computer Science Rutgers University), namely :
- Standing
- Walking
- Running
- Climbing up stairs
- Climbing down stairs
- Sit-ups
- Vacuuming
- Brushing teeth.

According to the invention and as illustrated in FIG.2, the method for performing a person-to-person (P2P) cashless payment between a payer and a payee proposes that the payer and the payee use respective mobile communication devices.

And it is further proposed that in a subscriber identity module inserted in each one of these two mobile communication devices, an accelerometer 120 and a payment application is embedded. A conventional subscriber identity module is well known in the prior art (and so called for example SIM or USIM) and is for example used in every GSM mobile communication device. It typically comprises a processor 123, a ROM memory 122 in which the operating system is incorporated and a working memory 121, for example a RAM memory. According to the invention and as a preferred (but in no case limitative) embodiment, it is proposed to embed in the subscriber identity module an accelerometer 123 and, typically in the form of a software, a payment application for example in a EEPROM memory. For example this payment application is a SIMToolkit application pursuant to ETSI Recommendations GSM 11.14 which is incorporated in the present document by this reference.

According to such a SIMToolkit application developed for the purposes of this invention, when the payer select "Make a Payment" in the menu of the SIM Toolkit menu of the payer's mobile communication device, a TERMINAL RESPONSE is sent to the payer's subscriber identity module indicating that the choice of SIMToolkit application "Make a Payment" is made. Then the payer's subscriber identity module sends to the payer's mobile communication device a request that another proactive command is to be sent to said payer's subscriber identity module. A FETCH command is sent again from the payer's mobile communication device to the payer's subscriber identity module for receiving in answer from the payer's subscriber identity module a GET INPUT proactive command with a message "Enter the amount to be paid" and the following message appears on the screen of the payer's mobile communication device :
**"Enter the amount to be paid in Euros"**

The payer then indicates an amount with the keyboard of its mobile communication device and validate with the "Enter" key. The payer's mobile communication device then sends the amount (number) so entered by the user to the payer's subscriber identity module through a TERMINAL RESPONSE command. The payer's subscriber identity module may then verify if the returned number is comprised between 0 and 50 to make sure the amount paid is limited to a micropayment-type amount. Then the payer's subscriber identity module sends to the payer's mobile communication device a request that another proactive command is to be sent to the payer's subscriber identity module. A FETCH command is sent again from the payer's mobile communication device to the payer's subscriber identity module for receiving in answer from the payer's subscriber identity module a DISPLAY proactive command with a message :
**"Shake your mobile with the payee's mobile in a same hand during 3 seconds from the tone"**

Such message is then display on the payer's mobile communication device. Then upon reception of a TERMINAL RESPONSE acknowledging the correct execution of this DISPLAY command, the payer's subscriber identity module sends to the payer's mobile communication device a request that another proactive command is to be sent to the payer's subscriber identity module. A FETCH command is then sent again from the payer's mobile communication device to the payer's subscriber identity module for receiving in answer from the payer's subscriber identity module a PLAY TONE proactive command.
A tone - or bip - is then generated from the payer's mobile communication device.

In parallel, the payee had activated a SIMToolkit application in the payee's subscriber identity module, developed for the purposes of this invention, under which he had selected "Receive a Payment" in the menu of the SIM Toolkit menu of the payee's mobile communication device.

As soon as the tone is generated, the payer, or payee, shakes the two mobile communication devices he has taken in the same hand. Alternatively he can bump the two mobile communication devices. He can also put the two mobile communication devices on a table and knock on the table. In all these cases, respective accelerations having common characteristics are applied to the two mobile communication devices.

The SIM toolkit application in the payer's subscriber identity module captures samples of the data generated by the accelerometer 120 during for example 4 seconds from the sending of the PLAY TONE proactive command.

The SIM Toolkit application in the payee's mobile communication device captures samples of the data generated by the accelerometer 120 during for example 4 seconds from the time an amplified acceleration curve (defined by a trigger) is detected from the time the payment application was activated by selection of "Receive a Payment" in the menu of the SIM Toolkit menu of the payee's mobile communication device.

Samples are for example stored for the three measurement axis x, y and z of both accelerometers in both respective payer's and payee's subscriber identity modules.

An SMS is typically 140 bytes. The samples, or other data representative of the accelerations, generated by both accelerometers during the pertinent 4 seconds are then sent respectively from said two mobile communication devices to a remote equipment -within the mobile communication network - respective data representative of said common acceleration. These SMS are generated by the two SIM Toolkit applications in the respective payer's and payee's subscriber identity modules by use of the SEND SMS commands.

The remote equipment compares the respective data representative of the acceleration applied to the mobile communication devices and in case of matching of said data, it authorizes the crediting of an account of the payee and the debit of an account of the payer.

As shown in FIG.4, the date sent by SMS by the two respective subscriber identity modules are representative of a tri-axis 106, 107, 108 acceleration during 4 seconds. In practice nevertheless, due to some time shifting of the timing reference for the samplings made for both accelerometers respectively in payee's and payer's subscriber identity modules, it may be more reliable to make the comparison of the samples during a limited time period of for example only 2 seconds.

Accordingly, a sliding window 190 of 2 seconds is defined. Naturally, the window size is some value smaller than the full size of the file.

For each of both SMS received, the process begins by measuring the first window's of bytes. The window then slides over one byte, by one byte. The effect of moving the window is that the contribution of the first byte in the window is removed and the contribution of the byte entering the window is introduced. The newly repositioned window yields a new comparison element. The window continues to be slid, gathering new comparison elements, until the end of the SMS is reached. Note that for efficiency the entire window does not need to be measured again, only the effect of removing the first byte and adding the new last byte needs to be computed. Taking into account that the SMS is 140 bytes representing a 10 second tri-axis acceleration representation, to compare 2 SMS for 2 second -windows, 70 x 70 comparison are required.

Even if the previously described method (**brute-force type algorithm**) proposes to check, for each possible position in the first SMS at which the selected "pattern" or window of the second SMS could match, whether it does in fact match, many other solutions exist which may be more appropriate. For example, but not limitatively, any "approximate matching algorithm" available in the public domain could apply and allow to take into account the minor or limited differences in the respective data representative of the applied acceleration that can be generated by the two subscriber identity modules, and that should be recognized as matching each other for the purposes of authorizing the payment from the payer account to the payee account..

Obviously the invention is not at all limited o the above embodiment. Further processing on the subscriber identity module of the signal produced by the accelerometer could be done. For example, the signal produced by the two accelerometers in the respective subscriber identity ²²²modules could be applied to a lowpass filter along accelerometer 3-axis, and only the amplitude of all the maximums of the acceleration modulus could be kept for sending through SMS. Any other processing is also covered by the invention.
Also in a non-limitative way, the data could be sent via http, BIP, GPRS or any other data channel.
The invention was described a subscriber identity module but can be applied to any removable module, such as but limited to SD cards, microSD cards, SIM cards.

## Claims

1. - Method for performing a person-to-person cashless payment between a payer and a payee, each having a respective mobile communication device, comprising the following steps:
- embedding in a removable module of each one of the two mobile communication devices, an accelerometer and a payment application,
- launching the payment application for each one of the two removable modules,
- applying to said two mobile communication devices respective accelerations having common characteristics,
- sending from each one of the two respective removable modules to a remote equipment -within the mobile communication network - data representative of the applied acceleration, as a function of a signal produced by the accelerometer embedded in said each removable module;
- comparing in said remote system the data representative of said respective accelerations as sent by the two respective removable modules, and in case of matching of said data representative of said respective accelerations, authorizing the crediting of an account of the payee and the debiting of an account of the payer.

2. - Method according to claim 1, wherein the removable module is a SIM card, a SD card or a microSD card.

3. - Removable module for insertion in a mobile communication device, **characterized in that** it comprises:
- a processor,
- a memory,
- an accelerometer;
- a payment application stored in said memory,
- said processor executing said payment application for successively (a) - sending a display message to a mobile communication in which said subscriber identity module is inserted, (b) - processing accelerometer data during a defined time period following the sending of said display message, and then (c) sending to a remote equipment -within the mobile communication network - data representative of an acceleration applied to the accelerometer as a function of the signal produced by the accelerometer in said each subscriber identity module.
